# EUROPEAN PATENT APPLICATION

(11) **EP 1 829 607 A1**
(43) Date of publication of application: **05.09.2007**
(21) Application number: 06461003.3
(22) Date of filing: 01.03.2006
(51) Int. Cl.: B01J 14/00, B01J 19/08, C02F 1/00, B01J 21/12

(54) **Liquid treatment device, ceramic material for the liquid treatment and liquid treatment method**

(71) Applicant: Sakowsky, Jon, Monkton MD 21111 (US); Wosinski, Stanislaw Adrian, 80-280 Gdansk (PL)
(72) Inventor: Sakowsky, Jon, Monkton MD 21111 (US); Wosinski, Stanislaw Adrian, 80-280 Gdansk (PL)
(74) Representative: Rumpel, Alicja

(57) **Abstract**

The apparatus for liquid treatment is designed as the body (8) and the casing (14) of the filtering apparatus having an oval section and joint together. The body (8) consists of the container (1) for the material with properties allowing liquid treatment, close to which the channel (2) for liquid distribution is situated whereas the casing (14) consists of the filter pack (15). The container (1) for the material with properties allowing liquid treatment consists of the chamber (6) and the bottom (7). The channel (2) is formed by the system of the cylindrical surfaces (9, 10) being closed on the top and in the upper wall (5) of the distribution channel(2) outlets (4) are situated. The inlet (3) is made in the side wall of the body (8). In the container (1) the ceramic material with properties allowing liquid treatment made of a monolithic solid having a shape close to a cylinder is placed.

The ceramic material within the frequency f range from 10 Hz up to 10 kHz of the measuring electric field has the loss tangent greater than 1.

## Description

The apparatus for liquid treatment, the ceramic material with properties allowing liquid treatment, the method of liquid treatment, the method of changing the yield of reaction and/or chemical and enzymatic processes as well as the method of changing the course of biological reactions.

The invention relates to the methods of liquid treatment and their effect on physical, chemical and biological processes as well as the apparatus for liquid treatment and ceramic material allowing liquid treatment and influencing the course of physical, chemical and biological processes.

According to the present state of art, apparatuses for liquid treatment making use of the electromagnetic field as well as the methods of liquid treatment applying substances with specific electromagnetic properties are known.

According to the Japanese patent description JP06198892, the method and apparatus for water treatment is known, which is based on dielectric properties of granulated ceramic.

According to the US patent description US4902390 the system of liquid treatment making use of the electrostatic field produced with electrodes was disclosed.
Moreover, according to the patent description US4886593 the apparatus for destroying of flora is known, which takes advantage of the electrostatic field influence on biological processes proceeding within living organisms.

The apparatus for liquid treatment according to the invention consists of the container for material allowing liquid treatment, close to which the channel for liquid distribution is placed where the liquid is being introduced through the inlet. The passage inlet is situated in the outer cylindrical surface on the one side of the wall; outlets are situated on the flange surface in the part placed over the channel end. The channel consists of at least one outlet situated in such a way that the distance covered by the liquid would be possibly the longest one. The channel is preferably formed by the system of cylindrical surfaces being closed on the top; this system can be the system composed of two coaxial cylindrical surfaces joint together by means of the wall where the top closure forms the cylinder with the flange. The outer diameter of the flange corresponds with the outer diameter of the outer cylindrical surface whereas the outer diameter of the cylinder forming the flange base corresponds with the inside diameter of the inside cylindrical surface; the height of the cylinder is slightly lower than the height of the cylindrical surfaces. Liquid outlet and/or outlets are situated in this wall of the distribution channel, which is the most distant one from the container. The container for the material allowing liquid treatment consists of the chamber and the bottom, combined with the chamber by using any known method. The chamber and the container bottom have an oval section, whereas according to the other preferable embodiment these makings have a near-circular section and they are joint together preferably using such methods as rotational welding and/or gluing. Also preferably, the container along with the distribution channel form an oval solid body.

According to the preferable embodiment, the container along with the liquid distribution channel is joint with the casing of the liquid filtering apparatus including at least one optional filter pack with the application of any known method. The liquid outlet and/or outlets allow the liquid to relocate from the channel over the container into the casing of the filtering apparatus.

The ceramic material with properties allowing liquid treatment in accordance with the invention within the frequency f range from 10 Hz up to 10 kHz of the measuring electric field has the loss tangent greater than 1. Preferably, the ceramic material within the frequency f range from 10 Hz up to 10 kHz of the measuring electric field has tg □~ f^{-k}, where: k ≈ 0,3 - 0,4 within the frequency range from 10 Hz up to 100 Hz, k ≈ 0,1 within the frequency range from 100 Hz up to 10 kHz and k ≈ 0,3 - 0,4 within the frequency range from 10 kHz up to 1 MHz and it also preferably contains Al₂O₃ and SiO₂ in a weight ratio close to 2:3 as well as admixtures of other metals oxides in a quantity not exceeding 7 %, and in the case of which the radiation diffraction pattern completed for Cu K alpha 1 radiation with lambda wavelength = 1.54056 Angstroem's has the below form: 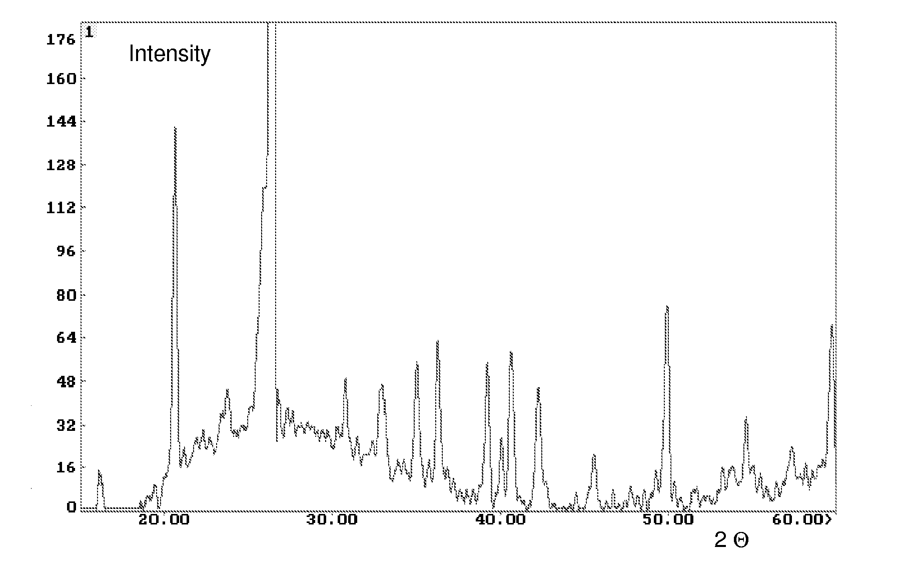 The ceramic material can also contain sodium compounds in a quantity of 0 up to 7%. The ceramic material is formed in the process of granulate burning to obtain the mass shaped with the hydraulic press under the pressure 3MPa up to 15 MPa; the process of burning at the highest required temperature from 960 up to 1300 °C is conducted during 1 up to 200 minutes. According to the other preferable embodiment it is received by forming it out from the binding agent and the process of burning is conducted at the highest required temperature from 960 up to 1300 °C during 1 up to 200 minutes. Duration of time when the mass subject to burning at the highest required temperature just before the process of cooling lasts from 1 up to 30 minutes.

Preferably the ceramic material has a form of a composite consisting of at least one optional component. The ceramic material can have a form of a monolithic solid of any shape preferably close to a cylinder; in the other option - it can have a form of a powder and/or granulate. The ceramic material is preferably connected with permanent magnets arranged in such a way that they form a field with alternate polarity in two dimensions.

The method of liquid treatment in accordance with the invention consists in that the liquid is introduced into the apparatus for liquid treatment according to the invention through the inlet, next it passes through the channel adjacent to the container with the material allowing the respective treatment according to the invention and then it flows out of the channel through at least one opening situated at the terminal length of the channel and flows into the casing of the filtering apparatus where it is filtered with the application of the known methods. At last, it is drained through the outlets of the filtering apparatus.

The alternate method of liquid treatment in accordance with the invention consists in that the liquid is introduced into the container, in the wall of which the material with properties allowing liquid treatment according to the invention is placed and it is shaped in any way.

The other method of liquid treatment in accordance with the invention consists in that any container with the liquid is situated at a distance of 0 up to 10 cm from the material with properties allowing liquid treatment according to the invention.

The method of changing the yield of reaction and/or chemical and/or enzymatic processes in accordance with the invention characterized in that the ceramic material according to the invention is situated at a distance of 0 up to 10 cm from the reactor where the reaction is being conducted and/or from the living organism where the process proceeds.

The method of changing the course of biological processes in accordance with the invention is characterized in that the ceramic material according to the invention is placed at a distance of 0 up to 10 cm from living organism and/or the biological material in vitro where the process proceeds.

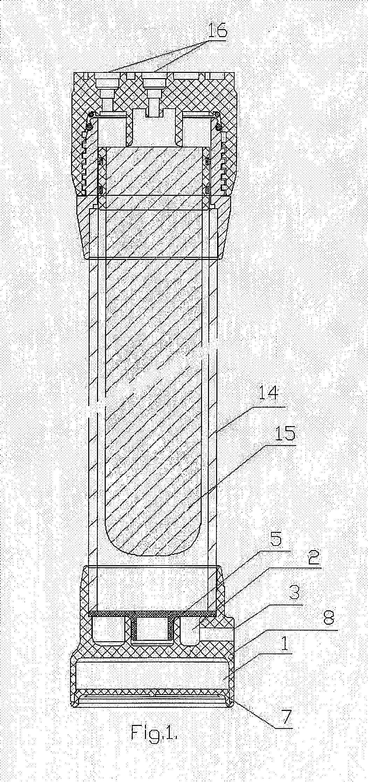

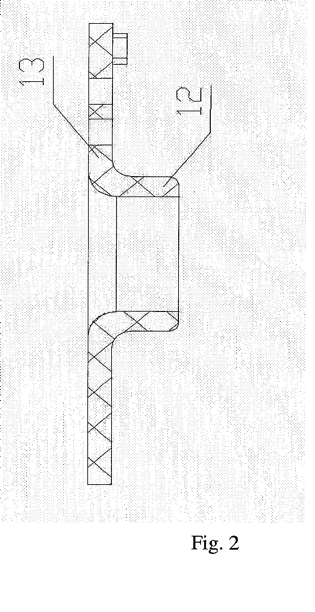

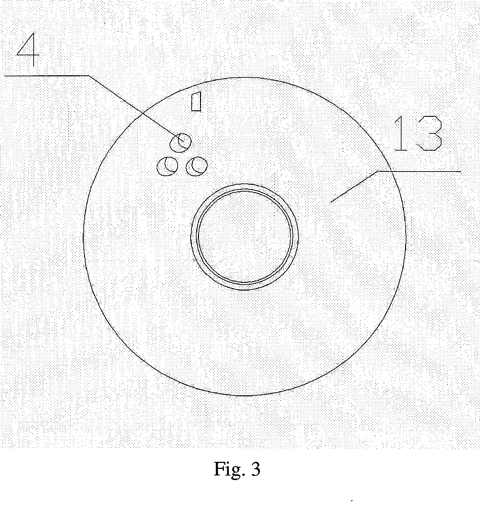

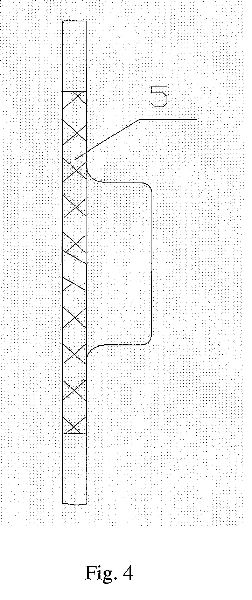

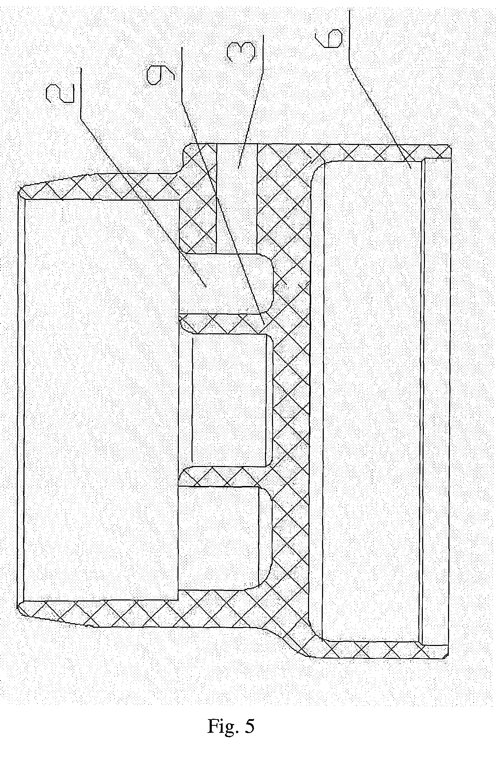

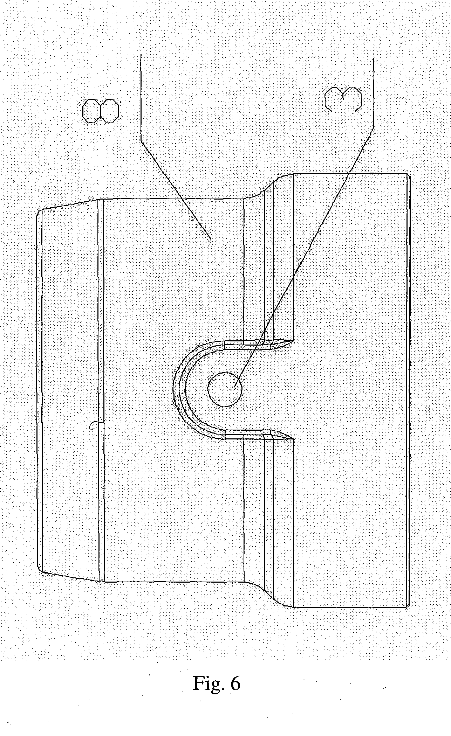

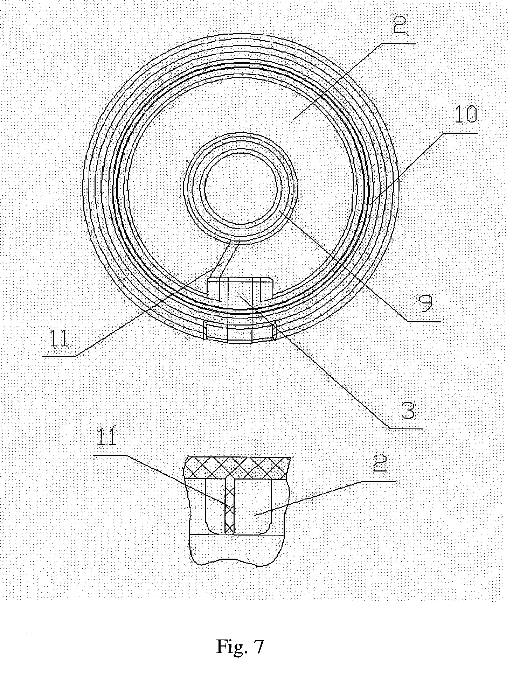

The method of changing the course of biological processes in accordance with the invention is characterized in that the ceramic material according to the invention is placed at a distance of 0 up to 10 cm from the culture medium constituting the process culture. The apparatus for liquid treatment in accordance with the invention has been presented in the embodiments in the respective figures, where the Fig.1 shows a cross-section of the apparatus, Fig. 2 shows a cross-section of the closure of the liquid distribution channel, Fig.3 shows the same closure from a top view, Fig.4 shows the other making of the channel closure, Fig.5 shows the container for the material allowing liquid treatment along with the distribution channel in a cross-section, Fig.6 shows the same container from a side view, Fig.7 shows the same container from a top view, Fig 8 shows the diagram of spectrum changes NQR depending on the duration of the ceramic material interaction with water according to the invention, Fig. 9 shows the diagram of spectrum changes NQR in respect of the formed crystals depending on the duration of the ceramic material interaction according to the invention, Fig 10 shows the ceramic material along with magnets incorporated in it from a top view.

### Example I

The apparatus in accordance with the invention is made of the oval-shaped elements joint together: the body 8 and the casing 14 of the liquid filtering apparatus. The body 8 contains the container 1 for the material allowing liquid treatment, close to which the liquid distribution channel 2 is situated whereas the casing 14 contains the filter pack 15. The container 1 for the material allowing liquid treatment consists of the chamber 6 and the bottom 7 . The channel 2 is formed by the system of the cylindrical surfaces 9, 10 being closed on the top and in the upper wall 5 of the distribution channel 2 outlets 4 are situated. The inlet 3 is made in a side wall of the body 8 . In the container 1, the ceramic material with properties allowing liquid treatment having a form of a monolithic solid of a shape close to a cylinder is placed.

According to the other preferable embodiment the ceramic material with properties allowing liquid treatment placed in the container 1 has a form of granulate and/or powder.

### Example II

The apparatus in accordance with the invention is made of the oval-shaped elements joint together: the body 8 and the casing 14 of the liquid filtering apparatus. The body 8 contains the container 1 for the material allowing liquid treatment, close to which the liquid distribution channel 2 is situated whereas the casing 14 contains the filter pack 15. The container 1 for the material allowing liquid treatment consists of the chamber 6 and the bottom 7 . The channel 2 formed by the system of the cylindrical surfaces 9, 10 closed on the top, where the top closure forms the cylinder 12 with the flange 13. The outer diameter of the flange 13 corresponds with the outer diameter of the cylindrical surface 10 and the outer diameter of the cylinder 12 constituting a base of the flange 13 corresponds with the inside diameter of the inside cylindrical surface 9, whereas the height of the cylinder 12 is slightly lower than the height of the cylindrical surfaces 9, 10. The passage inlet 3 is situated in the outer cylindrical surface 10, on the one side of the wall 11, and in the surface of the flange 13 in the part situated over the channel end on the other side of the wall 11, the outlets 4 were made. In the container 1, the ceramic material with properties allowing liquid treatment having a form of a monolithic solid of the shape close to a cylinder is placed.

According to the other preferable embodiment the ceramic material with properties allowing liquid treatment placed in the container 1 has a form of granulate and/or powder.

### Example III

According to the next embodiment, which is not presented in the figures, the casing of the filtering apparatus is provided with dual walls and the ceramic material with properties allowing liquid treatment made in a form of granulate and/or powder and/or a monolithic solid is put into the space between the walls of the casing.

According to the other embodiment, which is not presented in the figures, the casing of the filtering apparatus is provided with dual walls and the ceramic material with properties allowing liquid treatment made in a form of granulate and/or powder and/or a monolithic solid is put into the space between the dual walls of the container for the liquid.

### Example IV

According to one more embodiment, the ceramic material with properties allowing liquid treatment made in a form of granulate and/or powder and/or a monolithic solid is placed in the wall of traditional and/or special container for the liquid.

### Example V

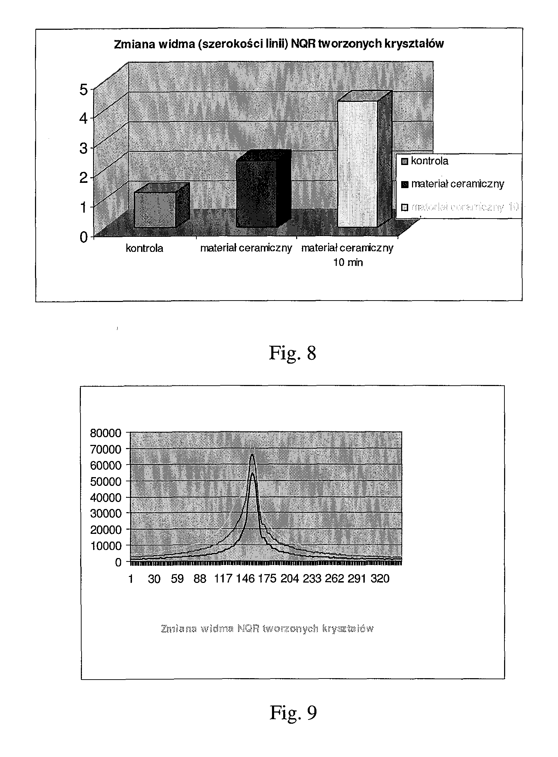

The method of liquid treatment in accordance with the invention consists in interacting with the liquid by means of its transmission through the apparatus for liquid treatment as described in any of the above examples I, II, III, IV. In consequence of applying the method in accordance with the invention the differences were found in morphology of BaClO₃₂ crystals being crystallized from water as result of interaction with the ceramic material according to the invention. The effect of the method application in accordance with the invention has been reflected in Fig. 8 and 9.

### Example VI

The method of changing the yield of reaction and/or chemical and/or enzymatic processes consists in interaction of the ceramic material according to the invention with the required amount of fat resulting in moderation of rancidity oxidation and in formation of free vegetable and animal fats e.g. butter, oils. Such an effect was reported during the EPR Electron Paramagnetic Resonance examination for X 9,7 GHz conducted with the Bruker EMX Spectrometer. The data reflecting effects obtained as result of the method application in accordance with the invention have been tabulated in the following way:

| | Ceramic material - 6 days | Ceramic material- 6 min | Without ceramic material |
|---|---|---|---|
| 1 | 0,33 | | |
| 2 | | | |
| 3 | 0,55 | | |
| 4 | | 0,68 | 0,67 |
| 5 | 0,64 | | |
| 6 | | 0,92 | 0,8 |
| 7 | 0,78 | | |
| 8 | | 1,02 | 0,96 |
| 9 | 0,88 | | |
| 10 | | 1,27 | 1,08 |
| 11 | 1,03 | | |
| 12 | | 1,3 | 1,26 |
| 13 | 1,15 | | |
| 14 | | 1,42 | 1,38 |
| 15 | 1,29 | | |
| 16 | | 1,57 | 1,53 |
| 17 | 1,35 | | |
| 18 | | 1,66 | 1,63 |
| 19 | 1,48 | | |
| 20 | | 1,78 | 1,76 |
| 21 | 1,62 | | |
| 22 | | 1,91 | 1,92 |
| 23 | 1,74 | | |
| 24 | | 2,07 | 2,01 |
| 25 | 1,88 | | |
| 26 | | 2,14 | 2,17 |
| 27 | 1,99 | | |
| 28 | | 2,25 | 2,26 |
| 29 | 2,05 | | |
| 30 | | 2,4 | 2,38 |
| 31 | | | |
| 32 | | 2,52 | 2,56 |

### Example VII

The method of affecting the course of biological processes has been presented in the example reflecting the interaction of the ceramic material according to the invention with the arrangement of the immune cells culture.

According to the first option before establishing of the cell cultures, the culture liquid RPMI 1640 was exposed in the field of the ceramic material situated directly underneath the container during 15 minutes; the above liquid was then used for establishing and growing the culture. The results obtained for the culture grown in the exposed liquid were compared with results obtained for the culture grown in the control liquid. According to this option, 10 experiments were performed. Each time in order to isolate and culture the immunocompetent cells, distal blood of healthy men - blood donors aged 20-26 - was used.

According to the second option, two sets of immune cells cultures were established on two culture plates (Nuncoln microplates) where under one of this plates the ceramic material was placed in accordance with the invention to be there within the entire culture period i.e. 72 hours. The results obtained for the exposed plates were compared with the results obtained for the control plates. With reference to such an arrangement, 20 experiments were performed. Each time in order to isolate and culture the immunocompetent cells, distal blood of healthy men - blood donors aged 20-26 - was used.

The cultures of mononuclear cells isolated from the blood of healthy persons, blood donors free from any acute clinical symptoms and/or chronic infection diseases, were grown in accordance with the above mentioned method as the option 1 referred to in the example of making with the subsequent amendment as described in the option 2 in this example of making. Each cell culture was established in the same way i.e. in three holes made in the plate and the final result was given as a mean value for those three cultures respectively. Each time the experimental arrangement consisted of two plates - exposed and control one - including the identical set of microcultures. Each microculture contained 10⁵ of cells in 0.2 ml of RPMI 1640 + 15% of inactivated autologous serum. The respective culture triplets were left without any stimulation, were stimulated with phytohemagglutinin PHA HA16, Murex Biotech, 0.4 µg/culture or concanavaline A Con A, Sigma, 8 µg/culture. The cultures were incubated during 72 hours in the ASSAB incubator at the temperature of 37°C under humid atmosphere containing 5% CO₂ in the air. During 24 hours of incubation the above mentioned rearrangements were introduced into the respective triplets of microcultures; 18 hours before the completion of the experiment the cultures were marked with 3H-thymidine 3HTdR, Ammersham, act. spec. 2 Cu/Mm in a dose of 0.4 µCu/culture. On completion of the culture indication of the in-built 3HTdR was made with the scintillation counter Packard Tri-carb 2100 TR. The described arrangement of the culture made it possible to mark:
- Spontaneous build in of 3HTdR,
- Proliferative response to PHA,
- Reponse to Con A, the results were presented as mean values of radioactive disintegration - dpm - x 10³/culture,
- Index of T cells suppressive activity SAT,
- Receptor saturation index IL-2,
- Rate of monokins IL-1ra/IL-1β effect on T cells proliferation - index LM.

The obtained results were analyzed statistically with the usage of the parametric test (i.e. *Student's t-test)* as well as the nonparametric test (i.e. Wilcoxon's *twin pair test* ) - the individual differences between the samples exposed on the ceramic material in accordance with the invention and the control samples were analyzed respectively.

With reference to cultures grown in the culture medium in the field of the plate made of the ceramic material in accordance with the invention, the higher values of spontaneous built-in ³H-thymidine compared with the cultures grown in the control culture medium were reported respectively as 4.20±2.69 and 1.63±0.81 x 10³ dpm. The above stated differences were statistically significant both in relation to the mean values and the number of experiments completed with results indicating the occurrence of such differences. On the other hand, no essential changes of values determining T cells responsiveness to PHA mitogens and Con A, P/C rates, indexes of T cells suppressive activity SAT and degree of receptor saturation of interleukin-2 were reported. The tendency was noticed to decreasing LM index value (index of T cells interaction with monokins) but these differences were not statistically significant. The application of the culture medium RPMI-1640 in the culture of mononuclear cells of human blood, which is exposed in the field of the ceramic material in accordance with the invention 15 minutes before its usage to grow the culture in comparison with the usage of the control culture medium results in increase of spontaneous in-built 3H-thymidine and decrease of the index value for monokins interactivity with T cells LM; with respect to all other parameters of the assessment i.e. response to PHA and Con A, index SAT and index of IL-2 receptor saturation no significant changes in value have been noticed. The exposition of the mononuclear cells culture grown with the human blood in the field of the plate made of the ceramic material in accordance with the invention during the entire culture period of 72 hours in comparison with the control cultures results in occurrence of changes similar to those as observed in the case of the exposition of the culture medium only before the culture in the field of the plate made of the ceramic material in accordance with the invention - tendency to increasing of the spontaneous in-built 3H-thymidine and decreasing of LM index value.

### Example VIII

The method of changing the yield of chemical and enzymatic processes is presented in the embodiment, in which lactic fermentation is proceeded with the addition of pure bacterial cultures used in production of yoghurt and granulated cottage cheeses. Natural yoghurt as well as fruit yoghurt is being produced. The lactic fermentation is proceeded in two 2-litres beakers at the temperature of 43°C in the production of yoghurt and 30°C. The one beaker is placed directly over the plate with the ceramic material in accordance with the invention whereas the second one constitutes the control sample, which is not subject to any interaction with the ceramic material.

The assumed pH-value for natural yoghurt can be achieved after 2.5 hours of fermentation in the case of the beaker subject to the interaction with the ceramic material in accordance with the invention, and after 3.5 hours in the case of the control sample.

The assumed pH-value for sour milk used in production of cottage cheese can be achieved after 3.5 hours of fermentation in the case of the beaker subject to the interaction with the ceramic material in accordance with the invention, and after 4 hours in the case of the control sample.

### Example IX

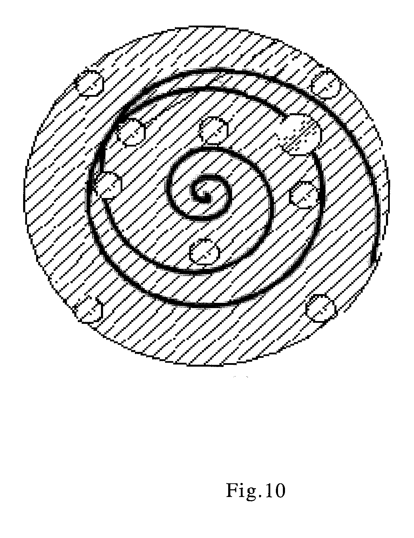

According to the other embodiment presented in the attached figure from a top view (Fig.10), the ceramic material with properties allowing liquid treatment has a form of a circular disk with a diameter of 70 millimeters and thickness of 10 millimeters. On the one surface of the disk 10 magnetic elements A-J are mounted, which produce a constant magnetic field. Magnetic elements have a form of cylinders arranged quasi-symmetrically: 4 are fully symmetrical on the periphery of the ceramic material, 6 - in the central part of it. Dimensions in millimeters, shape, arrangement of magnetic elements in relation to the disk centre defined with the coordinate system x,y and upwards polarity are tabulated in the following way:

| element | A | B | C | D | E | F | G | H | I | J |
|---|---|---|---|---|---|---|---|---|---|---|
| x;y[mm] | 0;12.4 | 0;-12.4 | -20;0 | -15;12.4 | 20;12.4 | 20;0 | -25;-25 | -25;25 | 25;25 | 25;-25 |
| Upwards polarity N/S | S | N | S | N | N | S | S | N | S | N |
| Diameter/height [mm] | 6/3.7 | 6/3,7 | 6/3.7 | 6/3.7 | 9.7/3.7 | 6/3.7 | 6/9.7 | 6/9.7 | 6/9.7 | 6/9.7 |
| Shape W-cylinder P-ring | W | W | W | W | P | W | W | W | W | W |
| Inside Diameter [mm] | | | | | 6 | | | | | |

## Claims

1. The apparatus for liquid treatment, **characterized in that** it consists of the container ( 1 ) for the material allowing liquid treatment, close to which the channel ( 2 ) for liquid distribution is placed where the liquid is being introduced through the inlet ( 3 ). The liquid flows out from the channel (2) through at least one outlet (4) situated in such a way that the distance covered by the liquid would be possibly the longest one.

2. The apparatus according to the claim 1, **characterized in that** the liquid outlet and/or outlets ( 4 ) are situated in this wall ( 5 ) of the distribution channel ( 2 ) which is the most distant one from the container ( 1 ).

3. The apparatus according to the claim 1 or 2,
**characterized in that** the container ( 1 ) for the material allowing liquid treatment consists of the chamber ( 6 ) and the bottom ( 7 ) combined with the chamber by using to this end any known method.

4. The apparatus according to the claim 3, **characterized in that** the chamber ( 6 ) and the container bottom (7 ) have an oval section.

5. The apparatus according to the claim 4, **characterized in that** the chamber( 6 ) and the container bottom ( 7 ) have a near-circular section.

6. The apparatus according to the claim 5, **characterized in that** the chamber ( 6 ) and the container bottom ( 7 ) are joint together using such methods as rotational welding and/or gluing.

7. The apparatus according to the claim 1 or 2 or 3 or 4 or 5 or 6, **characterized in that** the container ( 1 ) along with the distribution channel ( 2 ) form an oval solid body ( 8 ).

8. The apparatus according to the claim 7, **characterized in that** the body ( 8 ) is oval-shaped.

9. The apparatus according to the claim 1 or 2 or 3 or 4 or 5 or 6 or 7 or 8, **characterized in that** the channel ( 2 ) is formed by the system of the cylindrical surfaces (9, 10) being closed on the top.

10. The apparatus according to the claim 9, **characterized in that** the channel ( 2 ) is formed by the system of two coaxial cylindrical surfaces ( 9 and 10 ) being closed on the top and joint together by means of the wall ( 11 ) where the top closure forms the cylinder (12 ) with the flange ( 13 ); the outer diameter of the flange ( 13 ) corresponds with the outer diameter of the outer cylindrical surface ( 10 ) and the outer diameter of the cylinder ( 12 ) forming the base of the flange ( 13 ) corresponds with the inside diameter of the inside cylindrical surface ( 9 ); the height of the cylinder ( 12 ) is slightly lower than the height of the cylindrical surfaces ( 9 , 10 ).

11. The apparatus according to the claim 9 or 10, **characterized in that** the passage inlet ( 3 ) is situated in the outer cylindrical surface ( 10 ) on the one side of the wall( 11 ); on the flange surface ( 13 ), in the part placed over the channel end on the other side of the wall (11) outlets ( 4 ) are situated.

12. The apparatus according to the claim 1 or 2 or 3 or 4 or 5 or 6 or 7 or 8 or 9 or 10 or 11, **characterized in that** the container ( 1 ) along with the liquid distribution channel ( 2 ) is joint with the casing ( 14 ) of the liquid filtering apparatus including at least one optional filter pack ( 15 ) with the application of any known method; the liquid outlet and/or outlets ( 4 ) allow the liquid to relocate from the channel ( 2 ) over the container ( 1 ) into the casing ( 14 ) of the filtering apparatus.

13. The ceramic material with properties allowing liquid treatment as received traditionally, **characterized in that** within the frequency f range from 10 Hz up to 10 kHz of the measuring electric field it has the loss tangent greater than 1.

14. The ceramic material according to the claim 13, **characterized in that** within the frequency f range from 10 Hz up to kHz of the measuring electric field it has tg □~ f^{-k} where: k ≈ 0,3 - 0,4 within the frequency range from 10 Hz up to 100 Hz, k ≈ 0,1 within the frequency range from 100 Hz up to 10 kHz and k ≈ 0,3 - 0,4 within the frequency range from 10 kHz up to 1 MHz.

15. The ceramic material according to the claim 13 or 14, **characterized in that** it contains Al₂O₃ and SiO₂ in a weight ratio close to 2:3 as well as admixtures of other metals oxides in a quantity not exceeding 7 % and in the case of which the radiation diffraction pattern completed for Cu K (alpha 1) with lambda wavelength = 1.54056 Angstroem's has the below form:

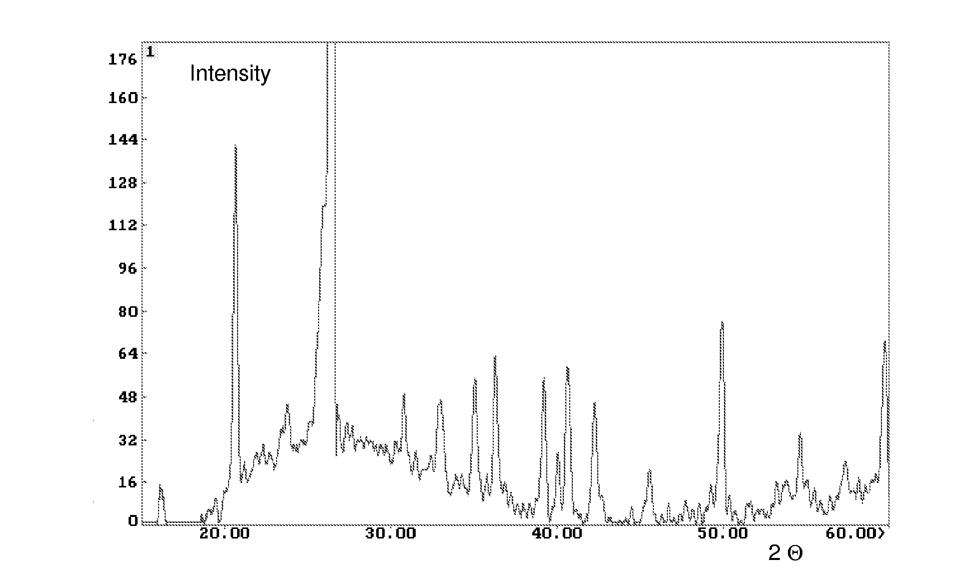

16. The ceramic material according to the claim 13 or 14 or 15, **characterized in that** it contains sodium compounds in a quantity of 0 up to 7%.

17. The ceramic material according to the claim 13 or 14 or 15 or 16, **characterized in that** it is formed in the process of granulate burning to obtain the mass shaped with the hydraulic press under the pressure of 3MPa up to 15 MPa; the process of burning proceeded at the highest required temperature from 960 up to 1300 °C is conducted during 1 up to 200 minutes.

18. The ceramic material according to the claim 13 or 14 or 15 or 16, **characterized in that** it is received by forming it out from the binding agent and the process of burning is conducted at the highest required temperature from 960 up to 1300 °C during 1 up to 200 minutes.

19. The ceramic material according to the claim 17 or 18, **characterized in that** duration of time when the mass is subject to the burning at the highest required temperature just before the process of cooling lasts from 1 up to 30 minutes.

20. The ceramic material according to the claim 13 or 14 or 15 or 16 or 17 or 18 or 19, **characterized in that** it has a form of a composite consisting of at least one optional component.

21. The ceramic material according to the claim 13 or 14 or 15 or 16 or 17 or 18 or 19 or 20, **characterized in that** it has a form of a monolithic solid of any shape.

22. The ceramic material according to the claim 21, **characterized in that** it has a form of a monolithic solid of the shape close to a cylinder.

23. The ceramic material according to the claim 13 or 14 or 15 or 16 or 17 or 18 or 19, **characterized in that** it has a form of granulate.

24. The ceramic material according to the claim 13 or 14 or 15 or 16 or 17 or 18 or 19, **characterized in that** it has a form of powder.

25. The ceramic material according to the claim 13 or 14 or 15 or 16 or 17 or 18 or 19 or 20 or 21 or 22, **characterized in that** it is connected with permanent magnets arranged in such a way that they form a field with alternate polarity in two dimensions.

26. The method of liquid treatment, **characterized in that** the liquid is introduced into the apparatus according to the claims from 1 to 12 through the inlet ( 3 ), next it passes through the channel ( 2 ) adjacent to the container( 1 ) including the material with properties allowing liquid treatment according to the claims from 13 to 25 and then it flows out of the channel ( 2 ) through at least one opening ( 4 ) situated at the terminal length of the channel ( 2 ) and flows into the casing ( 14 ) of the filtering apparatus where it is filtered with the application of the known methods; at last - it is drained through the outlets ( 16 ) of the filtering apparatus (15 ).

27. The method of liquid treatment, **characterized in that** the liquid is introduced into the container, in the wall of which the material with properties allowing liquid treatment according to the claims from 13 to 25 is placed and which is shaped in any way.

28. The method of liquid treatment, **characterized in that** any container with the liquid is situated at a distance of 0 up to 10 cm from the material with properties allowing liquid treatment according to the claims from 13 to 25.

29. The method of changing the yield of reaction and/or chemical processes and/or enzymatic processes, **characterized in that** the ceramic material according to the claims from 13 to 25 is situated at a distance of 0 up to 10 cm from the reactor and/or the living organism where the process proceeds.

30. The method of changing the course of biological processes, **characterized in that** the ceramic material according to the claims from 13 to 25 is situated at a distance of 0 up to 10 cm from the living organism and/or the biological material in vitro where the process proceeds.

31. The method of changing the course of biological processes, **characterized in that** the ceramic material according to the claims from 13 up to 25 is situated at a distance of 0 up to 10 cm from the culture medium constituting the process culture.
